# EUROPÄISCHE PATENTSCHRIFT

(11) **EP 0 502 482 B1**
(45) Veröffentlichungstag und Bekanntmachung des Hinweises auf die Patenterteilung: **28.06.1995**
(21) Anmeldenummer: 92103626.5
(22) Anmeldetag: 03.03.1992
(51) Int. Cl.: F16D 65/12

(54) **Zusammengesetzte Bremsscheibe für eine Teilbelagscheibenbremse**
Assembled brake disc for a spot-type disc brake
Disque de frein assemblé pour un frein à garniture partielle

(30) Priorität: 04.03.1991 DE 4106808
(43) Veröffentlichungstag der Anmeldung: 09.09.1992
(73) Patentinhaber: Bergische Stahl-Industrie, D-42859 Remscheid (DE)
(72) Erfinder: Wiebelhaus, Wolfgang, W-4330 Mühlheim-Ruhr (DE); Gronemann, Manfred, W-5630 Remscheid (DE); Lehmann, Wolfgang, W-5630 Remscheid (DE); Schneider, Jürgen, Dr., W-4630 Bochum (DE); Rocholl, Hans, W-5630 Remscheid (DE)
(74) Vertreter: Dahlkamp, Heinrich-Leo

(56) Entgegenhaltungen:
- DE-A- 2 426 952
- DE-A- 2 906 589
- US-A- 5 062 503

## Beschreibung

Die Erfindung betrifft eine zusammengesetzte Bremsscheibe für eine Teilbelagscheibenbremse gemäss dem Oberbegriff des Anspruchs 1.

Aus der DE-A-29 06 589 (1), insbesondere Figur 1 und 3 ist eine zusammengesetzte Bremsscheibe bekannt, welche an Bremsring und Nabe ineinandergreifende Nuten und Nocken mit schrägen Seitenflächen besitzt. Weiterhin sind die übrigen Merkmale des Anspruchs aus dem Stand der Technik bekannt. Der Nachteil dieser bekannten Konstruktion besteht darin, dass der Aufwand bei der Herstellung der Nuten erheblich ist,da sonst die eine oder andere Seitenfläche der Nut bzw. des Keils nicht an den entsprechenden Seitenflächen des anderen Teils anliegt, was dann zu zu grossen Flächenpressungen der anderen sich berührenden Flächen und damit zu einem grossen Verschleiss führt.

Der vorliegenden Erfindung liegt daher die Aufgabe zugrunde, die Nachteile der bekannten Konstruktion zu vermeiden und eine Keilkonstruktion für Nut und Nocken zu schaffen, die eine satte Verbindung des Nockens am einen Teil mit der Nut am anderen Teil ergibt und zwar für alle Verbindungen an einer Bremsscheibe und dafür zu sorgen, dass der Bremsring nach der Anlage keinen Planschlag bekommt.

Die Lösung der Aufgabe besteht darin, dass der die Schrägflächen tragende Teil des Nockens separat in Form eines Keils ausgebildet ist, welcher unter der Einwirkung einer Druckfeder zwischen Nocken und Seitenwand der Nut eingedrückt wird.

Zweckmässig ist der Nocken ein unabhängiges Teil, welches einerseits an den Flächen der Nabenarme und andererseits in einer Vertiefung des Bremsrings liegt.

Der Vorteil der erfindungsgemässen Ausführungsform der Verbindungsteile, mit denen der Bremsring mit einer Nabe so fest verbunden wird, besteht darin, dass von aussen auf den Bremsring einwirkende Kräfte ohne nachteilige Wirkung leicht von dem Bremsring auf die Nabe übertragen werden können.

In den Zeichnungen sind beispielsweise Ausführungsformen der Erfindung dargestellt und zwar zeigen :
- Figur 1: einen konzentrischen Schnitt durch eine Verbindung zwischen Nabe und Bremsring,
- Figur 2A: einen konzentrischen Schnitt nach der Linie II-II der Figur 2B,
- Figur 2B: eine Seitenansicht auf eine Verbindungsstelle zwischen Bremsring und Nabe,
- Figur 3: einen Schnitt nach der Linie III-III der Figur 4,
- Figur 4: eine Seitenansicht einer Verbindung von Bremsring und Nabe nach Figur 3.

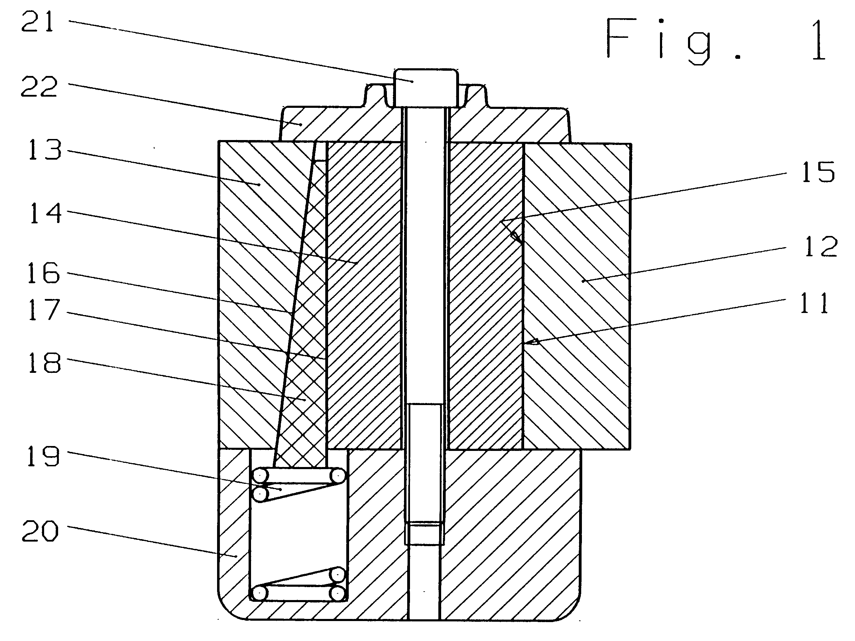

Nach Fig. 1 liegt in einer radialen Nut 11, welche von den Armen 12 und 13 gebildet wird, ein mit dem Bremsring verbundener Nocken 14, dessen eine Seite 15 radial und achsparallel liegt. Auf der anderen Seite ist die Seitenfläche 16 des Arms 13 keilförmig schräg ausgebildet und zwischen der achsparallelen Fläche 17 des Nockens 14 und der keilförmigen Fläche 16 des Arms 13 liegt ein Keil 18, welcher von der Druckfeder 19 zwischen die Seitenflächen 16 und 17 gedrückt wird, solange dafür genügend Platz bleibt. Das Widerlager 20 für die Feder 19 wird von einer im Nocken 14 achparallel liegenden Schraube 21 festgehalten. Die Schraube 21 hält gleichzeitig auf der anderen Seite des Nockens 14 ein die gesamte Nut überdeckendes Sicherungsstück 22. Das Widerlager 20 ist ebenfalls so gross gehalten, dass es die Nut 11 vollständig überspannt und damit als Sicherung wirkt. Selbstverständlich können auch zwei Keile 18 auf den beiden Seiten des Nockens 14 vorgesehenen werden. Die Feder 19 drückt den Keil 18 soweit zwischen die Flächen 16 der Nut 11 und Fläche 17 des Nockens 14, sodass der Nocken 14 fest in der Nut gehalten wird. Sollte durch Verschleiss die volle Auflage der Fächen 16 und 17 und 15 nicht mehr gegeben sein, so wird der Keil 18 automatisch von der Feder 19 weiter zwischen den Nocken 14 und den Arm 13 gedrückt, wodurch der Nocken 14 wieder fest in der Nut 11 verankert ist.

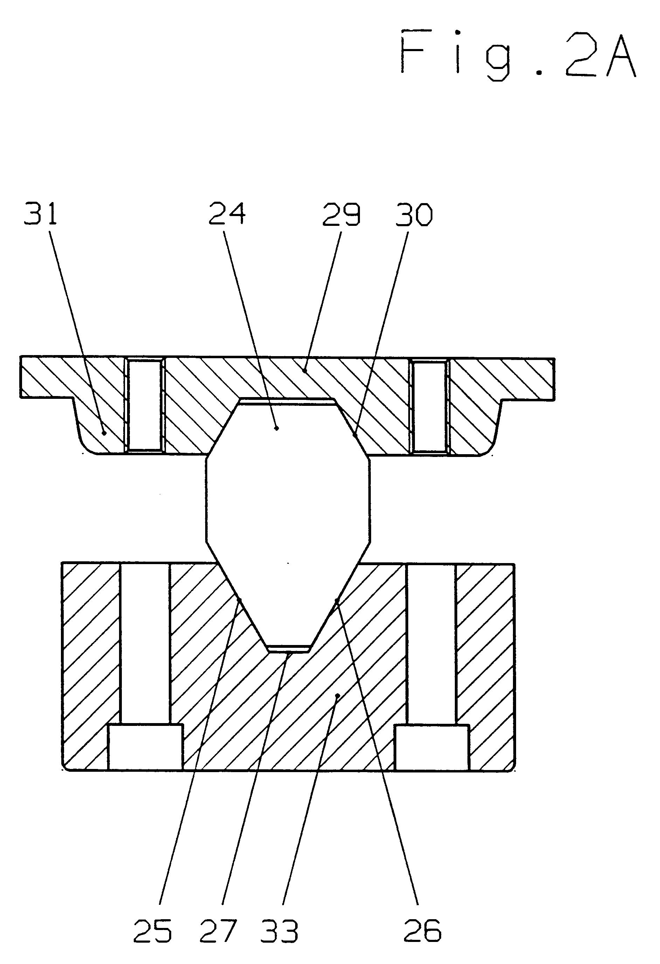

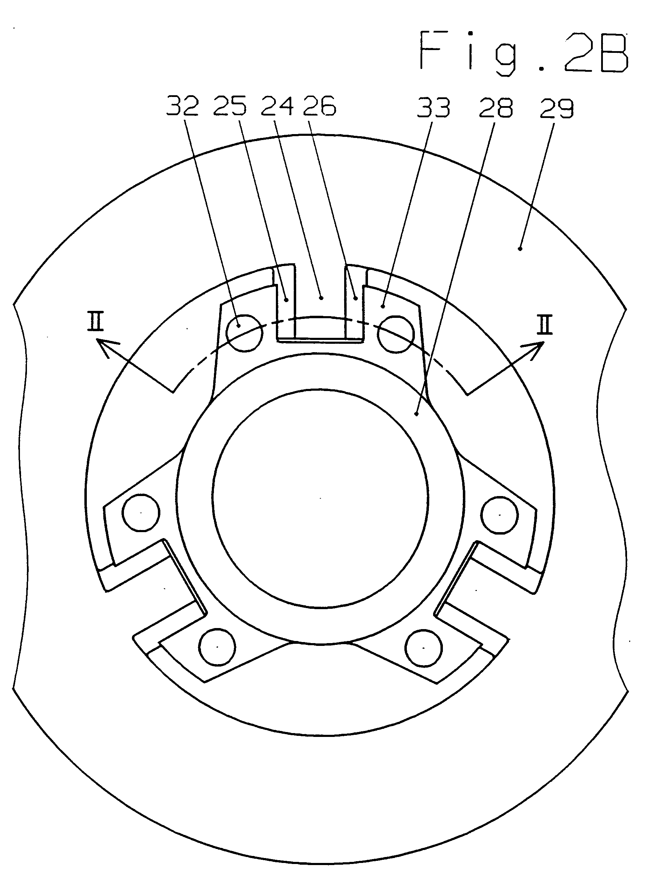

Nach den Fig. 2A und 2B ist der Nocken als separates und radial liegendes Teil 24 ausgebildet und besitzt zwei radial liegende Schrägflächen 25 und 26, welche von einer Ausnehmung 27 gebildet werden, welche ihrerseits einen Teil der Nabe 28 bilden. Die andere dem Bremsring 29 zugewandte Seite 30 des Nockens 24 liegt ebenfalls mit leichten Schrägflächen zwischen auf der Rückseite des Bremsrings 29 angeordneten Nocken 31. Zusammengehalten werden Bremsring und Nabe durch zwei seitlich der Ausnehmung 27 liegende achsparallele Schrauben 32, welche sich bis in den Bremsring 29 erstrecken. Durch die Schrägflächen 25,26 wird der Bremsring 29 fest mit den Nabenarmen 33 verbunden. Sollten hierbei geringe Teilungsfehler auftreten, so werden diese durch das Spiel in den Schrauben 32 ausgeglichen.

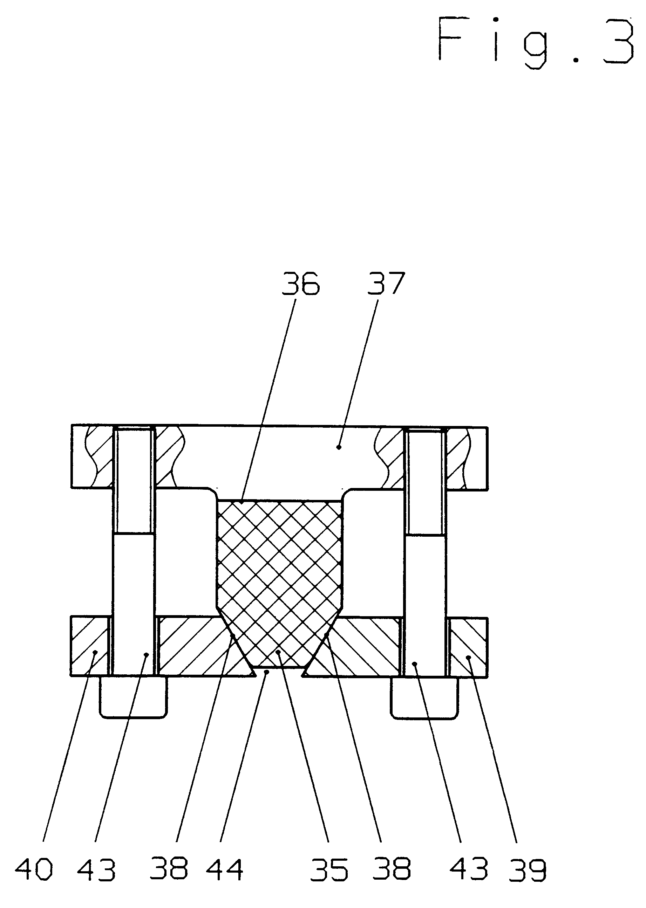

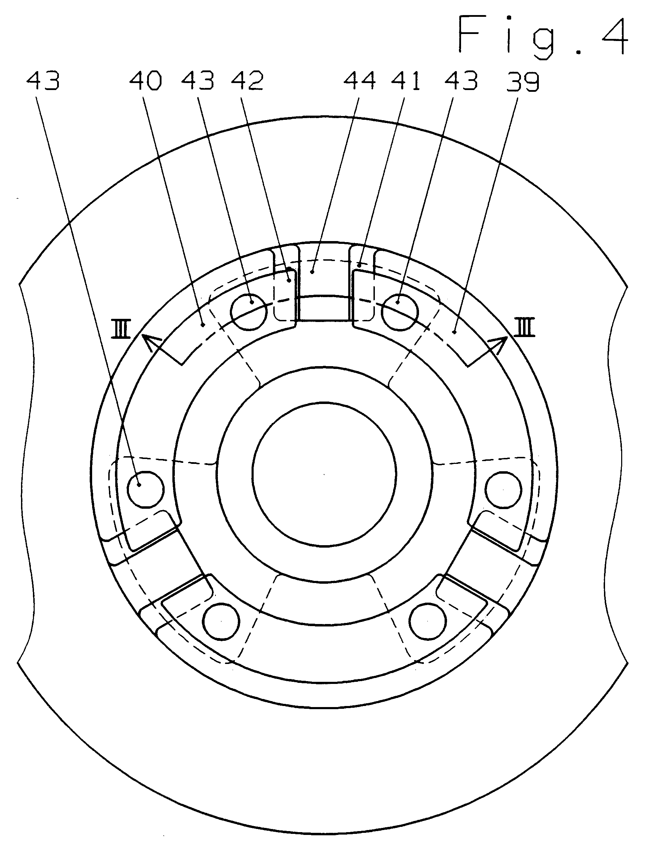

Die Ausbildung der Konstruktion nach den Fig. 3 und 4 besteht darin, dass der Nocken 35 mit der Breitseite 36 an der Nabe 37 anliegt und dessen andere Seite dachförmig abgeschrägt ist. Es besteht die Möglichkeit, den Nocken 35 mit dem Bremsring 37 mit diesem aus einem Stück bestehend zu verbinden. Weiter sind Segmente 39,40 vorgesehen, an deren Enden die mit den dachförmigen Flächen 38 des Nockens 35 korrespondierenden Schrägflächen 41,42 angeordnet sind, wobei jeweils ein Segment 39 oder 40 an zwei Nocken 35 anliegt. Die Segmente werden mit achsparallelen Schrauben 43 an der Nabe 37 festgeschraubt. Auch bei dieser Ausführung kann genauso wie bei allen anderen Ausführungen die Anzahl der Nocken frei gewählt und damit den Erfordernissen angepasst werden. Der Vorteil dieser letzten Ausführung betsteht darin, dass selbst dann, wenn nur noch ein Segment am Rad vorhanden ist, die Funktion allenfalls vermindert ist, aber nicht völlig verloren gegangen ist.

## Patentansprüche

1. Zusammengesetzte Bremsscheibe für eine Teilbelagscheibenbremse, bei der die Verbindung zwischen Bremsring (29) und Nabe (28) mittels eines Nockens (14,24,35) am einen Teil (28,29) erfolgt, der sich in eine am anderen Teil (28,29) befindliche Nut (11,27,44) erstreckt und mit Schrägflächen an deren etwa radialen achsparallelen Seitenflächen (16) anliegt, wobei mindestens ein Paar der aufeinanderliegenden Seitenflächen (16) der Nut (11,27,44) mit achsparallelen Schrauben (21,32,43) an den Nocken (14,24,35) gepresst wird, dadurch gekennzeichnet, dass der die Schrägflächen tragende Teil des Nockens (14,24,35) separat in Form eines Keils (18) ausbildet ist, welcher unter der Einwirkung einer Druckfeder (19) zwischen Nocken (14,24,35) und Seitenwand (16) der Nut (11) eingedrückt wird.

2. Bremsscheibe nach Anspruch 1, dadurch gekennzeichnet, dass die Nut von einer Ausnehmung (27) mit schrägen Wänden (25,26) gebildet ist, welche in den sich radial erstreckenden Armen (33) der Nabe (28) liegt, wobei die Arme (33) mit achsparallelen Schrauben (32) am Bremsring (29) festgeschraubt sind.

3. Bremsscheibe nach Anspruch 2, dadurch gekennzeichnet, dass der Nocken (24) ein unabhängiges Teil ist, welches einerseits in der Nut (27) der Nabenarme (33) und andererseits in einer von Nocken (31) gebildeten Ausnehmung auf der Rückseite des Bremsrings (29) liegt.

4. Bremsscheibe nach Anspruch 1, dadurch gekennzeichnet, dass der Nocken (35) einerseits mit einer Breitseite (36) an der Nabe (37) anliegt und andererseits dachförmige Schrägflächen (38) besitzt, und mehrere Kreissegmente (39,40) vorgesehen sind, an deren beiden Enden jeweils eine Schrägfläche (38,41,42) einer Nut (44) angeordnet ist.

## Claims

1. A brake disc assembly for a partially lined disc brake with the connection between brake ring (29) and hub (28) accomplished by means of a cam (14, 24, 35) on a part (28, 29), which extends into a groove (11, 27, 44) located in the other part (28, 29) and abuts with slanted surfaces against their approximately radial axis-parallel side surfaces (16), and that at least one pair of the stacked side surfaces (16) of the groove (11, 27, 44) is pressed by axis-parallel bolts (21, 32, 43) against the cam (14, 24, 35), **characterized in that** the part of the cam (14, 24, 35) which supports the slanted surfaces is structured separately in the shape of a wedge (18) which is pressed under the influence of a pressure spring (19) between cams (14, 24, 35) and the side wall (16) of the groove (11).

2. Brake disc according to claim 1, **characterized in that** the groove is formed by a recess (27) with slanted walls (25, 26) which lies in the radially extending arms (33) of the hub (28), and that the arms (33) are bolted to the brake ring (29) by way of axis-parallel bolts (32).

3. Brake disc according to claim 2, **characterized in that** the cam (24) is an independent part which is positioned on the one side in the groove (27) of the hub arms (33) and on the other side in a recess, which is formed by earns (31), at the back of the brake ring (29).

4. Brake disc according to claim 1, **characterized in that** the cam (35) abuts on the one side with a broadside (36) against the hub (37) and has on the other side roofshaped slanted surfaces (38), and that a plurality of circular segments (39, 40) is provided having on both their ends a respective slanted surface (38, 41, 42) of a groove (44).

## Revendications

1. Disque de freinage composé pour un frein à disque à garniture partielle, dans lequel la liaison entre l'anneau de freinage (29) et le moyeu (28) se fait au moyen d'une saillie (14, 24, 35) située sur une partie (28, 29) qui entre dans une rainure (11, 27, 44) située sur l'autre partie (28, 29) et s'appuie par des surfaces inclinées sur les surfaces latérales (16) de cette rainure à près radiales et parallèles à l'axe, au moins une paire des surfaces latérales appuyées l'une sur l'autre (16) de la rainure (11, 27, 44) étant serrée contre la saillie (14, 24, 35) par des vis (21, 32, 43) parallèles à l'axe, caractérisé par le fait que la partie de la saillie (14, 24, 35) qui porte les surfaces inclinées est faite séparément sous la forme d'un coin (18) qui est enfoncé entre la saillie (14, 24, 35) et la paroi latérale (16) de la rainure (11) par l'action d'un ressort de compression (19).

2. Disque de freinage selon la revendication 1, caractérisé par le fait que la rainure est formée par un évidement (27) à parois inclinées (25, 26) situé dans les bras s'étendant radialement (33) du moyeu (28), ces bras (33) étant fixés à l'anneau de freinage (29) par des vis (32) parallèles à l'axe.

3. Disque de freinage selon la revendication 2, caractérisé par le fait que la saillie (24) est un élément indépendant qui se trouve d'une part dans la rainure (27) des bras (33) du moyeu et d'autre part dans un évidement formé par des saillies (31) situé sur le côté arrière de l'anneau de freinage (29).

4. Disque de freinage selon la revendication 1, caractérisé par le fait que la saillie (35) d'une part s'appuie sur le moyeu (37) par une face large (36) et d'autre part possède des surfaces inclinées en forme de toit (38), et qu'il est prévu plusieurs segments de cercle (39, 40) à chaque extrémité desquels se trouve une surface inclinée (38, 41, 42) d'une rainure (44).
